# EUROPEAN PATENT APPLICATION

(11) **EP 4 253 209 A1**
(43) Date of publication of application: **04.10.2023**
(21) Application number: 22165855.2
(22) Date of filing: 31.03.2022
(51) Int. Cl.: B62J 6/08, B62H 5/14

(54) **BICYCLE COMPONENT ASSEMBLY**

(71) Applicant: Murata Manufacturing Co., Ltd., Nagaokakyo-shi, Kyoto 617-8555 (JP)
(72) Inventor: Yamashita, Tsuyoshi, 2132 JC Hoofddorp (NL); Jalagar, Pawan, 81541 München (DE); Sakaguchi, Hitoshi, 617-8555 Kyoto (JP); Kanagawa, Kiyoshi, 6178555 Kyoto (JP); Amagai, Yoshihide, 617-8555 Kyoto (JP)
(74) Representative: Thoma, Michael

(57) **Abstract**

Bicycle (1) component assembly (6)The present invention relates to a bicycle component assembly (6), comprising a power generator (7) and a mountain carrier for carrying and mounting said power generator (7) to a structural part of a bicycle (1), said power generator (7) including a rotor (8) provided with magnets (9) to cooperate with a rim (4) of a wheel (3) of the bicycle (1) in a contactless manner, wherein said mounting carrier (12) includes a fixture (13) adapted to a bicycle lock (17) to mount the bicycle component assembly (6) to the bicycle lock (17) with the rotor (8) of the power generator (7) neighboring the wheels rim (4).

## Description

The present invention generally relates to bicycles. More particularly, the present invention relates to a bicycle component assembly comprising a power generator and a mounting carrier for carrying and mounting said power generator to a structural part of the bicycle, said power generator including a rotor provided with magnets for interoperability with a rim of a wheel of the bicycle in a contactless manner.

On bicycles, electric power may be needed for several reasons. Aside from powering luminaires, modern bicycles may include some data processing equipment such as GPS devices, monitoring devices including calculators for determining average speed, miles traveled or difference in altitude climbed, wherein display devices are used for displaying relevant information or road maps. Also some sensors for measuring or detecting relevant parameters such as the status of the bicycle or parts thereof, may need electric power.

As a source for such electric power, batteries or accumulators may be used. Nevertheless, it is helpful for produce electric energy on the bicycle in terms of converting kinetic energy of the bicycle into electric energy by means of a power generator. Electric power produced by such generator may be directly supplied to a user such as a luminaire, but also may be stored into a battery or accumulator from which it is then supplied to the respective user such as a sensor or a data processing module.

Aside from mechanically driven generators, contactless power generators may be used to convert kinetic energy into electric energy, wherein such contactless power generators may include a rotor provided with a plurality of permanent magnets which may cooperate or interact with a wheel's rim in a contactless way. Such contactless interoperability or cooperation of the magnets with the rim means a magnetic interaction of the magnets with the rotating rim making the rotor with the magnets rotate. More particularly, the effect of eddy-current may be utilized to make the rotor with the magnets follow the rotation of a wheel's rim and generate electric current via coils passed by the rotating magnets. For example, EP 25 93 351 B1 shows such contactless power generator converting kinematic power of a wheel's rim of a bicycle into electric current by means of utilizing eddy-currents in a contactless manner, wherein the rotor carrying a plurality of permanent magnets is mounted in a lateral position next to a side-face of the rim to rotate about a rotor axis substantially perpendicular to the wheel's axis of rotation. More particularly, the power generator is attached to the caliper brakes for braking the front wheel of the bicycle.

Such contactless power generators need to be positioned rather precisely and close to the rim to work efficiently. When the gap between the magnets on the rotor to the rim surface becomes large, eddy-current forces are reduced and the rotor may not properly follow the rim's rotation. On the other hand, the arrangement of the coils cooperating with the rotating magnets to produce electricity, need some space and, in general, make the power generator bulky what may necessitate some distance between the rotor carrying the magnets and the rim. Such problem of needing some space around the rotor and the magnets thereof, is intensified when accommodating the rotor inside a housing what is, however, desired so as to take full advantage of the contactless architecture of the power generator. As no mechanical contact to the tire or to the rim is necessary, the rotor carrying the magnets and the coils may be encapsulated inside a housing to prevent these components from environmental damages or loads such as moisture, dust or gravel ejected from the wheel.

In view of the above, it is a general objective underlying the present invention to provide for an improved bicycle component assembly avoiding at least one of the problems of the prior art. More particularly, an improved bicycle attachment should allow for easy, but precise positioning of the power generator in proximity to a wheel's rim. A still further objective underlying the present invention is to position the contactless power generator with a very small gap between the wheel's rim and the magnets on the rotor to achieve high efficiency in converting kinematic energy of the wheel into electric power.

So as to achieve at least some of the aforementioned objectives, the present invention suggests a bicycle component assembly as defined by claim 1 and a bicycle having such bicycle component assembly as defined by claim 16. Preferred embodiments of the invention are laid down in the dependent claims.

More particularly, it is suggested to attach the bicycle component assembly to a bicycle lock to position the power generator of the assembly close to a wheel's rim. The mounting carrier which is provided for carrying and mounting the power generator, includes a fixture which is adapted to a bicycle lock to mount the bicycle component assembly to the bicycle lock with the rotor of the power generator neighboring the wheel's rim so the magnets on the rotor may cooperate with the rim of the wheel in a contactless way to make the rotor with the magnets follow the rotation of the rim due to the eddy-current effect.

Attaching the power generator assembly to the bicycle lock allows for precisely positioning the generator's rotor in a stable manner. Contrary to, e.g., caliper brakes which are displaced when engaging the brakes and may get deformed by the braking forces, the bicycle lock may offer a rigid and stable mounting platform to the bicycle attachment including the power generator, in particular in the non-locking state when using the bicycle so the generator's rotor may be positioned exactly and closely to the rim, thereby achieving efficient interaction of the permanent magnets on the rotor with the rotating rim and effecting high eddy-current forces.

More particularly, said fixture of the mounting carrier may be configured to form-fit with a stationary frame part of the bicycle lock that may be fixed to or form a part of a frame portion of the frame of the bicycle.

Depending on the type of locking, the bicycle lock may be arranged at different portions of the bicycle frame. In particular, the bicycle lock may be configured to lock a front wheel and/or a rear wheel of the bicycle so the wheel may not rotate, wherein rotation of the wheel may be completely blocked or restricted to some angular displacement. So as to prevent a wheel from rotation, the bicycle lock may include a stationary frame part attached to a fork rotatably supporting the front wheel or to the frame tail supporting the rear wheel of the bicycle. Preferably, the bicycle lock may include a stationary frame part that is non-detachably fixed to a portion of the frame tail supporting the rear wheel, wherein, e.g., such frame tail may include a pair of upper struts extending from a rear wheel axle support portion to a main frame portion supporting the bicycle's saddle. More particularly, the stationary frame part of the bicycle lock may be rigidly and non-detachably fixed to a portion of said pair of struts above and neighboring the tire of the rear wheel. For example, the stationary frame part of the bicycle lock may be welded to the bicycle's frame and/or connected thereto by means of non-detachable connectors such as crimping elements and/or glued to the frame.

Said stationary frame part of the bicycle lock may support a movable locking part such as, e.g., a curved or non-curved crossbar that can be moved into a locking position in which said crossbar may extend between a pair of neighboring spokes of the wheel inside the rim. In addition or in the alternative, the movable locking element of the bicycle lock may include a flexible locking element such as a chain or a rope which may have one end fixedly attached to the stationary frame part and another end that may be releasable fixed to the stationary part or another portion of the flexible locking element, after having been put through the spokes or round around the rim. Other types of movable locking elements such as latches may be used to prevent rotation of the wheel.

So as to achieve a stable attachment, the fixture of the mounting carrier of the bicycle component assembly may include at least one protrusion or pin to be inserted into a recess and/or to penetrate a through-hole of the bicycle lock. In the alternative or in addition, the fixture may include at least one recess and/or at least one through-hole to receive a protrusion or pin of the bicycle lock which may be inserted into such recess or penetrate such through-hole of the fixture of the mounting carrier.

More particularly, the stationary frame part of the bicycle lock may include a plurality of cut-outs or perforations, wherein the fixture of the mounting carrier may include a plurality of protrusions or pins arranged in a way corresponding to the arrangement of the cut-outs or perforations so the plurality of projections or pins may be inserted into the cut-outs or recesses of the stationary frame part of the bicycle lock.

Engaging a plurality of projections of the mounting carrier and/or of the stationary frame part of the lock with a plurality of recesses or through-holes of the stationary frame part and/or the mounting carrier, achieves a multi-point connection and thus, a distribution of the holding/supporting forces what in turn achieves a stable mounting of the attachment as a whole. Therefore, even under external loads, the rotor of the power generator may be positioned exactly relative to the rim.

According to an advantageous embodiment of the present invention, the fixture of the mounting carrier may include at least one non-detachable connector for non-detachably connecting the mounting carrier to the bicycle lock. Non-detachable means the connector cannot be disconnected from its counterpart without destruction of the connector and/or destruction of the counterpart.

For example, said at least one connector may include at least one crimp element to be crimped and connected to the bicycle lock by crimping. In addition or in the alternative, at least one crimp element may be provided at the stationary frame part of the bicycle lock to be crimped and connected to the mounting carrier of the power generator attachment by crimping.

Such at least one crimp element may include, e.g., a crimp pin to be inserted into one of the aforementioned recesses or through-holes.

In addition or in the alternative, other non-detachable connectors may be used. For example, the bicycle component assembly may be welded or glued to the bicycle lock, and/or latching elements elastically engaging/locking, but not allowing unlocking without destruction may be used.

According to another aspect of the present invention, the rotor may be accommodated in a generator housing having differently shaped sides. More particularly, said generator housing accommodating the rotor and the magnets attached thereto, may have a flattening on a side facing the rim of the wheel cooperating with the rotor, whereas the generator housing's side facing away from said rim may be rounded.

More particularly, said generator housing may have a substantially cup-like or bowl-like shape or a barrel shape, wherein a circumferential or peripheral wall may encompass the rotor at the outer periphery thereof. Such jacket wall or peripheral wall of the cup-like housing may have the aforementioned flattening on its side facing the rim and, on the other hand, may have a rounded shape similar to a cylindrical wall on the side facing away from the rim.

Such combination of curved and flattened portions allows the generator housing to have a tight fit, whereas on the other hand the magnets on the rotor, on its rotatory path, may be positioned close to the rim surface to achieve efficient interaction with the rim.

More particularly, said flattened side of the generator housing may include a housing opening which may be closed by a cover of non-magnetic material so interaction of the rotating magnets with the rim is not disturbed. The other housing portions such as the rounded jacket wall on the side facing away from the rim, may be formed from other materials such as metal or steel or may have a cover thickness.

The power generator may include a plurality of coils positioned at an outer peripheral side of the rotor and spaced apart from each other. More particularly, said plurality of coils may be accommodated in a ring-shaped space between the outer periphery of the rotor and a jacket wall of the generator housing. For example, four or six coils may be provided to cooperate with, e.g., four or six magnets on the rotor of the power generator.

More particularly, the coils may be arranged with a substantially even distribution of the coils wherein such even distribution, however, may include an irregularity where the distribution is different. So as to allow closeness of the rotating magnets to the rim surface, the pitch between the two coils next to the rim may be larger than the pitch between other neighboring pairs of coils.

For example, the coils may be substantially evenly distributed around the periphery of the rotor with an irregularity in distribution in a sector facing the wheel's rim, wherein said coils may be positioned around the periphery of the rotor with the same from a first coil to a last coil and a second pitch larger than the first pitch between the last coil and the first coil. Said last and first coils may be the coils next to the rim of the wheel.

More particularly, the aforementioned larger pitch, i.e. the larger distance between two neighboring coils, may be provided at the section where the generator housing has its flattening. Combining such flattening of the housing with a larger distance of the coils allows a very small gap between the outer periphery of the rotor and the rim of the wheel cooperating with the magnets on the rotor.

Nevertheless, such distribution of the coils with an enlarged pitch between the two neighbouring coils next to the wheel's rim may provide for relevant advantages irrespective of the generator housing having a flattening. Even when the housing has no flattening or when there is no closed housing at all, the enlarged pitch between the coils next to the rim allows for positioning the generator closer to the rim, i.e. with a reduced gap between the rotor and the rim's surface.

For example, the distance between the two coils next to the rim may be more than 150% or more than 200% of the distance between other pairs of neighboring coils. For example, when six coils are provided, the first, smaller pitch between neighboring coils may be substantially 40° to 50°, whereas the second larger pitch between the two coils next to the rim may range from 90° to 170° or from 120° to 160° or from 140° to 170°.

The aforementioned pitch means the angular distance from a center of one coil to the center of the next coil.

For mounting the coils, a coil carrier may be provided which, together with the coils mounted thereon, may be accommodated in the aforementioned generator housing. More particularly, the coils may be accommodated in a ring-shaped space between the generator housing's jacket wall and the outer periphery of the rotor.

The aforementioned coil carrier may include plurality of coil-supporting protrusions extending radially away from the outer periphery of the rotor, wherein a coil may be wound around each of said coil support protrusions.

Said coil carrier may form a cup-like cage surrounding the rotor and accommodated inside the generator housing.

Irrespective of the coil carrier forming a cage, a pair of said coil protrusions next to the wheel's rim, preferably may be spaced apart from each other at a pitch larger than the pitch between other neighbouring pairs of the coil protrusions. Such other pairs of coil protrusions include at least one coil protrusion further away from the wheel's rim than the two coil protrusions next to the rim.

As mentioned above, the electric energy produced by the generator may be used to feed various elements of the bicycle such as a luminaire or a display for displaying a map. However, according to another aspect the generator may supply electric energy, either directly or indirectly via a battery or accumulator loaded by such generator, to a misuse monitoring module to electronically detect misuse of the bicycle. More particularly, such misuse monitoring device may include at least one sensor for detecting the status of the bicycle lock and/or the status of the connection of the bicycle lock to the bicycle component assembly, and a misuse indicator to indicate misuse of the bicycle in response to at least a signal of said sensor.

Such sensor for detecting the lock status may benefit from the attachment's mounting to the lock, in particular to the stationary frame part thereof, as explained before. Due to such mounting to the bicycle lock, the sensor is in close proximity to the lock and thus, detecting the status thereof is easy. Also detection of unexpected separation of the attachment from the lock can be detected rather easily.

More particularly, the locking status as detected by the sensor may be combined logically with at least another piece of information logically linked to the locking/unlocking state of the bicycle lock. For example, when the bicycle is locked, it usually may not travel or a speed sensor may not indicate any speed or the locked wheel may not rotate. Thus, another sensor or detector may be provided for detecting such information, and the misuse indicator may be configured to indicate misuse when one or more of such parameters unusual for a locked bicycle occurs.

For example, a travelling detector, in particular a global positioning module, may be provided for detecting travelling of the bicycle, wherein said misuse-indicator imay be configured to indicate misuse of the bicycle in response to at least a locking-state-signal of said sensor indicating the bicycle lock is locked, and a travelling signal of said travelling detector indicating the bicycle is travelling.

More particularly, said misuse indicator may be configured to indicate misuse in response to a separation signal of the sensor indicating separation of the bicycle component assembly from the bicycle lock.

In the following, an embodiment of the present invention is described in greater detail on the basis of drawings illustrating such embodiment, wherein
- Fig. 1:: a partial rear view of a bicycle showing the bicycle lock for locking the rear wheel of the bicycle and the bicycle component assembly including a power generator attached to said bicycle lock,
- Fig. 2:: a partial perspective view of the power generator assembly attached to the bicycle lock,
- Fig. 3:: a partial perspective view of the form-fitting connection of the mounting carrier of the attachment to the stationary frame part of the bicycle lock of figure 2,
- Fig. 4:: a perspective view of the bicycle component assembly of the preceding figures, showing the generator housing having a flattening on a side facing the rim of the wheel of the bicycle,
- Fig. 5:: a cross-sectional view along the line queue-queue in fig. 4,
- Fig. 6:: a cross-sectional view of the power generator taken along line p-p in fig. 4,
- Fig. 7:: a perspective view of the coil carrier of the power generator, showing radial projections around which coils are wound,
- Fig. 8:: a perspective view of the rotor of the power generator with permanent magnets attached thereto,
- Fig. 9:: an exploded perspective view of the power generator of the preceding figures,
- Fig. 10:: a perspective view of a power generator according to a further embodiment of the invention having a substantially cube-like housing,
- Fig. 11:: a top view of the rotor carrying permanent magnets and the coils cooperating therewith and distributed around the outer periphery of the rotor,
- Fig. 12:: a combination of the top view of fig. 11 and a diagram showing the circuitry connecting the coils to power terminals of the generator.

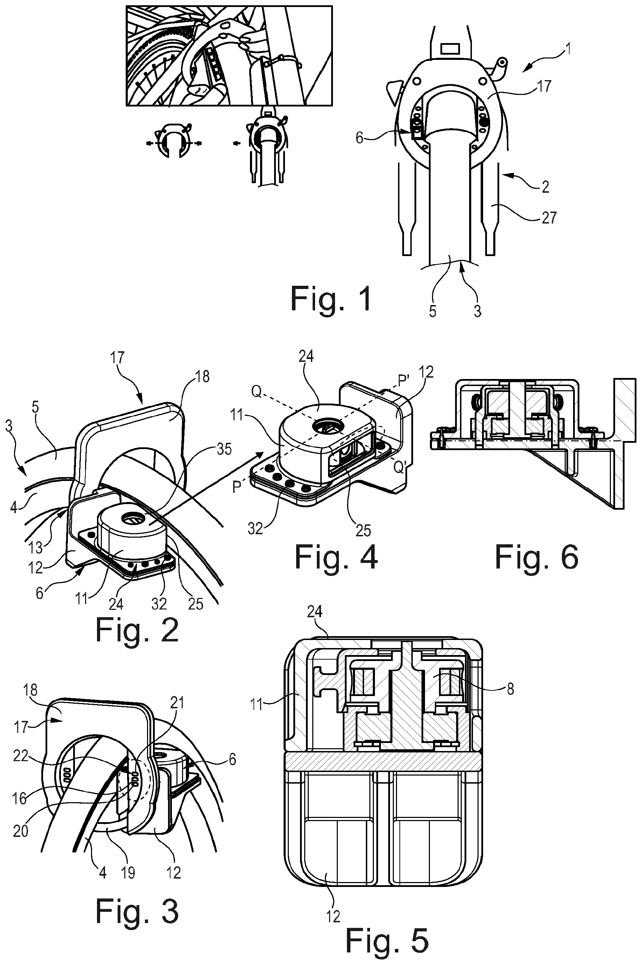

As can be seen from figure 1, a bicycle 1 includes a bicycle frame 2 which includes a frame tail 2r rotatably supporting a rear wheel 3 of the bicycle. As known per se, the bicycle 1 may further include a front fork rotatably mounted to said bicycle frame 2 to rotate about a steering axis and connected to a handle bar, wherein said front fork rotatably supports a front wheel.

As further shown by figure 1, the bicycle 1 further includes a bicycle lock 17 which may be configured to lock the rear wheel 3 relative to frame 2 to prevent the rear wheel 3 from rotation.

Said bicycle lock 17 may include a stationary frame part 18 which may be non-detachably mounted to the frame tail 2r, more particularly to a pair of frame struts 31 forming the upper part of the frame tail 2r and/or connecting the rear wheel axle support portion to a main frame part supporting a settle of the bicycle 1.

Said stationary frame part 18 may be positioned above the tire of the rear wheel 3 and/or neighboring the tire of the rear wheel 3 so a movable locking part 19 movably supported by the stationary frame part 18 may be moved into a locking position in which the movable locking part 19 extends through the spokes of the rear wheel 3 to prevent rotation thereof. In a non-locking position, the movable locking part 19 does not extend through the space between the spokes, but may be held on a side and/or on top of the wheel so the rear wheel 3 may freely rotate without interference with the bicycle lock 17.

For example, the movable locking part 19 may include a curved locking bar which may be pivotably and/or slidably supported on the stationary frame part 18 to be moved between the aforementioned two positions in terms of the locking position and the non-locking position.

A lockdown element may prevent the movable locking part 19 from moving, in particular from moving out of the locking position, wherein such lockdown element may include a key to unbar the lockdown element.

As can be seen from figures 2 and 3, the stationary frame part 18 of the bicycle lock 17 may have a u-shaped configuration and/or a plate-like, horse-shoe shape including two legs extending on opposite sides of the rim of the rear wheel 3, and a yoke or bridge leg connecting the aforementioned two side legs to each other and extending across the outer periphery of the tire of the rear wheel 3. In other words, the stationary frame part 18 may form a sort of bridge structure bridging the rear wheel 3. Needless to say that the stationary frame part 18 of the bicycle lock 17 may have other configurations, wherein for example it may extend on only one side of the rear wheel 3 or of a front wheel of the bicycle 1.

The stationary frame part 18 of the bicycle lock 17 is used as a mounting platform for mounting the bicycle component assembly 6 which includes a power generator 7 for converting rotatory energy of the wheel 3 into electric power in a contactless manner.

The bicycle component assembly 6 further includes a mounting carrier 12 for carrying and mounting said power generator 7 to the bicycle lock 17. Said mounting carrier 12 may include a plate-like and/or frame-like structure which, on the one hand, has a mount for the power generator 7 and, on the other hand, includes a fixture 13 for fixedly attaching the mounting carrier 12 to the bicycle lock 17.

More particularly, as can be seen from Fig. 2, the power generator 7 may be fixedly attached to the mounting carrier 12 by means of screws and/or rivets and/or crimping bolts and/or other form-fitting connectors 32 which may hold a generator housing 11 at the mounting carrier 12. In addition or in the alternative, other fixations of the power generator 7 to the mounting carrier 12 may be provided, wherein for example adhesive may be used to glue the generator housing 11 to the mounting carrier 12.

In the alternative or in addition, the mounting carrier 12 and the generator housing 11 or another structural element of the power generator 7 may be formed integrally in one piece, wherein, for example, the mounting carrier 12 may be formed by a flange-like extension of the generator housing 11.

The fixture 13 of the mounting carrier 12 for fixing the power generator 7 to the bicycle lock 17, may include one or more non-detachable connectors 22 which may not be released from the bicycle lock 17 without destruction thereof.

For example, said at least one connector 22 may include at least one crimp element 16 to be crimped and connected to the bicycle lock 17 by crimping. In addition or in the alternative, at least one crimp element may be provided at the stationary frame part of the bicycle lock to be crimped and connected to the mounting carrier of the power generator attachment by crimping.

Such at least one crimp element may include, e.g., a crimp pin 14 to be inserted into one of a plurality of recesses or through-holes 21 formed in the aforementioned stationary frame part 18, cf. Fig. 3.

In addition or in the alternative, other non-detachable connectors may be used. For example, the bicycle component assembly 6 may be welded or glued to the bicycle lock 17, and/or latching elements elastically engaging/locking, but not allowing unlocking without destruction may be used.

As shown by Figs. 2, 4 and 9, the rotor 8 may be accommodated in a generator housing 24 having differently shaped sides. More particularly, said generator housing 24 accommodating the rotor 8 and the magnets 9 attached thereto, may have a flattening 25 on a side facing the rim 4 of the wheel 3 cooperating with the rotor 8, and a rounded side 26 facing away from said rim 4.

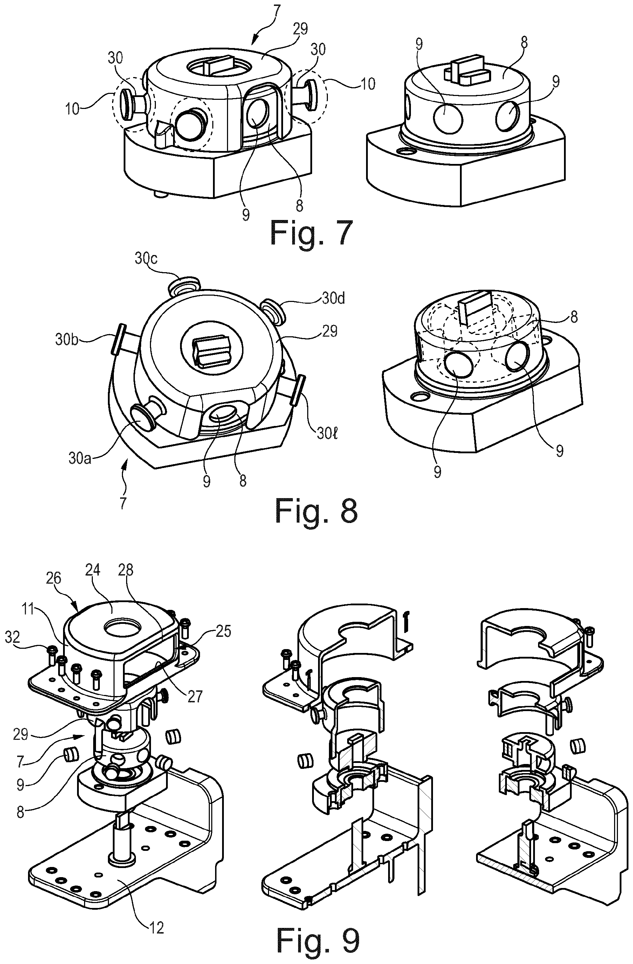

More particularly, said generator housing 24 may have a substantially cup-like or bowl-like shape or a barrel shape, cf. Fig. 9, wherein a circumferential or peripheral wall 11 may encompass the rotor 8 at the outer periphery thereof. Such jacket wall 11 or peripheral wall of the cup-like housing 24 may have the aforementioned flattening 25 on its side facing the rim 4 and, on the other hand, may have a rounded shape similar to a cylindrical wall on the side 26 facing away from the rim 4.

Said flattened side 25 of the generator housing 24 may include a housing cut-out or opening 27, cf. Figs. 4 and 9, which may be closed by a cover 28 of non-magnetic material so interaction of the rotating magnets 9 with the rim 4 is not disturbed. The other housing portions such as the rounded jacket wall 11 on the side facing away from the rim 4, may be formed from other materials such as metal or steel or may have a cover thickness.

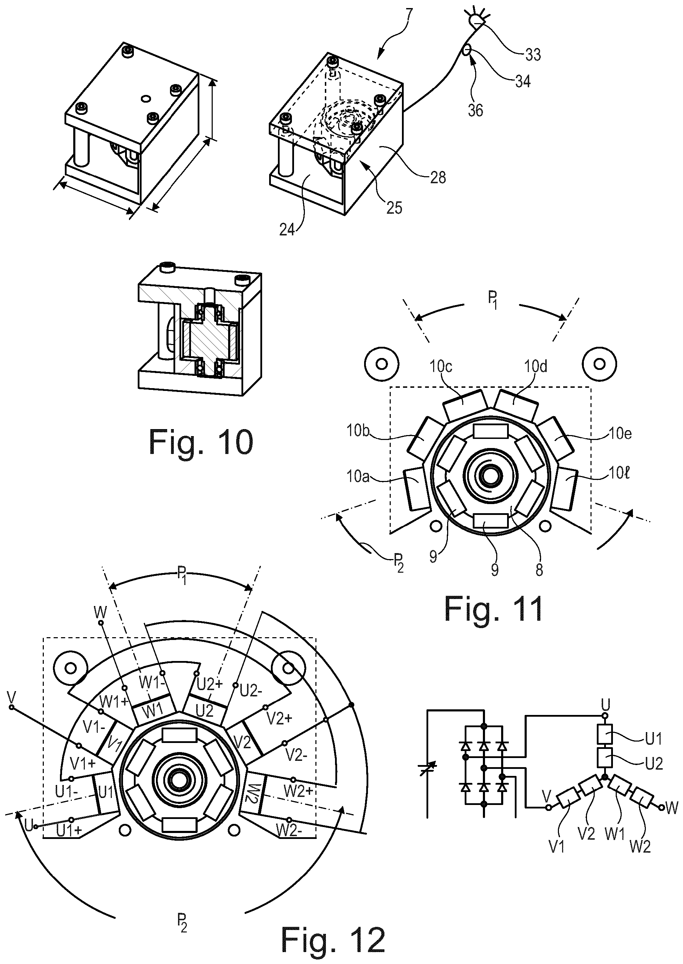

The power generator 7 includes a plurality of coils 10 which may be positioned at an outer peripheral side of the rotor 8 and spaced apart from each other. More particularly, said plurality of coils 10 may be accommodated in a ring-shaped space between the outer periphery of the rotor 8 and the jacket wall 11 of the generator housing 24, cf. Figs. 7 and 9. For example, four or six coils 10 may be provided to cooperate with, e.g., four or six magnets on the rotor 8 of the power generator 7, cf. Fig. 8 and Fig. 11.

More particularly, the coils may be arranged in a substantially even distribution around the rotor 8, however, such even distribution may include an irregularity where the distribution is different. So as to allow closeness of the rotating magnets 9 to the rim surface, the pitch p1 between the two coils 10a, 101 next to the rim 4 may be larger than the pitch p2 between other neighboring pairs of coils 10b, 10c, 10d, 10e. Since the coils 10 are on the outer circumference of the rotor 8, they would necessitate a larger gap between the rotor 8 and the rim 4 if they were present at the sector where the rotor 8 comes closest to the rim 4. However, the coils are spaced apart from such sector due to the enlarged pitch p2 between the two coils 10, 101 which are next to the rim 4, cf. Figs. 7,8 and Figs. 11, 12.

More particularly, the coils 10 are substantially evenly distributed around the periphery of the rotor 8 with an irregularity in distribution in the sector 35 facing the wheel's rim 4, wherein said coils 10 may be positioned around the periphery of the rotor 8 with the same first pitch p1 between neighbouring pairs of coils from a first coil 10a to a last coil 101 and a second pitch p1 larger than the first pitch p1 between the last coil 101 and the first coil 10a, cf. Fig. 12. Said last and first coils 101, 10a may be the coils next to the rim 4 of the wheel 3.

More particularly, the aforementioned larger pitch p2, i.e. the larger distance between two neighboring coils 10a, 101 may be provided at the section where the generator housing 24 has its flattening 25. Combining such flattening 25 of the housing 24 with a larger distance of the coils 10a, 101 allows a very small gap between the outer periphery of the rotor 8 and the rim 4 of the wheel cooperating with the magnets 9 on the rotor 8, cf. Fig. 2.

For example, the distance or pitch p2 between the two coils 10a, 10l next to the rim 4 may be more than 150% or more than 200% of the distance or pitch p1 between other pairs of neighboring coils. For example, when six coils are provided, the first, smaller pitch p1 between neighboring coils 10a, b; 10b, c; 10c, d; 10e, I may be substantially 40° to 50°, whereas the second larger pitch p2 between the two coils 10a, 10l next to the rim 4 may range from 90° to 170° or from 120° to 160° or from 140° to 170°.

The aforementioned pitch p means the angular distance from a center of one coil 10 to the center of the next coil 10.

For mounting the coils 10, a coil carrier 29 may be provided which, together with the coils 10 mounted thereon, may be accommodated in the aforementioned generator housing 24. More particularly, the coils 10 may held by such coil carrier 29 in a ring-shaped space between the generator housing's 24 jacket wall 11 and the outer periphery of the rotor 8.

The aforementioned coil carrier 29 may include plurality of coil-supporting protrusions 30 extending radially away from the outer periphery of the rotor 8, wherein a coil 10 may be wound around each of said coil support protrusions 30, cf. Fig. 7.

Said coil carrier 29 may form a cup-like cage surrounding the rotor 8 and accommodated inside the generator housing 24.

Similar to the aforementioned distribution of the coils 10, a pair 30a, 30l of said coil protrusions 30 next to the wheel's rim 4, may be spaced apart from each other at a pitch p2 larger than the pitch p1 between other neighbouring pairs of the coil protrusions 30. Such other pairs of coil protrusions 30a-l include at least one coil protrusion 30b, 30c, 30d further away from the wheel's rim 4 than the two coil protrusions 30 next to the rim 4.

As mentioned above, the electric energy produced by the generator 7 may be used to feed various elements of the bicycle 1 such as a luminaire or a display for displaying a map. However, according to another aspect the generator 7 may supply electric energy, either directly or indirectly via a battery or accumulator loaded by such generator 7, to a misuse monitoring module to electronically detect misuse of the bicycle 1. More particularly, such misuse monitoring device may include at least one sensor 33 for detecting the status of the bicycle lock 17 and/or the status of the connection of the bicycle lock 17 to the bicycle component assembly 6, and a misuse indicator 36 to indicate misuse of the bicycle 1 in response to at least a signal of said sensor 33 .

Such sensor 33 for detecting the lock status may benefit from the attachment's mounting to the lock 17, in particular to the stationary frame part 18 thereof, since the sensor 33 is in close proximity to the lock 17 and thus, detecting the status thereof is easy. Also detection of unexpected separation of the attachment from the lock 17 can be detected rather easily.

For example, a magnetic sensor 33 may be used which may detect the locking status of the lock in terms of the position of the movable locking element 19, and, at the same time, may detect a change of the position of the attachment relative to the lock 17. When the attachment 6 is separated from the lock 17, in particular from the stationary part 18 thereof, the sensor 33 will render a different sensor output as the magnetic material of the stationary frame part 18 is no longer within the sensor's detection range.

The locking status as detected by the sensor 33 may be combined logically with at least another piece of information logically linked to the locking/unlocking state of the bicycle lock. For example, when the bicycle 1 is locked, it usually may not travel or a speed sensor may not indicate any speed or the locked wheel may not rotate. Thus, another sensor or detector may be provided for detecting such information, and the misuse indicator may be configured to indicate misuse when one or more of such parameters unusual for a locked bicycle occurs.

For example, a travelling detector 34, in particular a global positioning or GPS module, may be provided for detecting travelling of the bicycle 1, wherein said misuse-indicator 36 may be configured to indicate misuse of the bicycle 1 in response to at least a locking-state-signal of said sensor 33 indicating the bicycle lock 17 is locked, and a travelling signal of said travelling detector 34 indicating the bicycle 1 is travelling.

Moreover, said misuse indicator 36 may be configured to also indicate misuse in response to a separation signal of the sensor 33 indicating separation of the bicycle component assembly 6 from the bicycle lock 17.

## Claims

1. Bicycle component assembly, comprising a power generator (7) and a mounting carrier (12) for carrying and mounting said power generator (7) to a structural part of a bicycle (1), said power generator (7) including a rotor (8) provided with magnets for interoperability with a rim (4) of a wheel (3) of the bicycle (1) in a contactless manner, **characterized in that** said mounting carrier (12) includes a fixture (13) adapted to a bicycle lock (17) to mount the bicycle component assembly (6) to the bicycle lock (17) with the rotor (8) of the power generator (7) neighboring the wheel's rim (4).

2. Bicycle component assembly according to the preceding claim, wherein said fixture (13) is configured to form-fit with a stationary frame part (18) of the bicycle lock (17) at a fork or at a frame tail (2r) of the bicycle (1).

3. Bicycle component assembly according to anyone of the preceding claims, wherein said fixture (13) includes at least one protrusion or pin (20) to be inserted into a recess and/or to penetrate a through-hole of the bicycle lock (17).

4. Bicycle component assembly according to anyone of the preceding claims, wherein said fixture (13) includes at least one none-detachable connector (22) for non-detachably connecting the mounting carrier (12) to the bicycle lock (17).

5. Bicycle component assembly according to the preceding claim, wherein said at least one connector (22) includes at least one crimp element (16) to be crimped and connected to the bicycle lock (17) by crimping.

6. Bicycle component assembly according to anyone of the preceding claims, wherein said rotor (8) is accommodated in a generator housing (24) having a flattening (25) on a side facing the wheel's rim (4).

7. Bicycle component assembly according to the preceding claim, wherein said flattening (25) of the generator housing (24) is formed by a housing opening (27) and/or by a cover (28) of non-magnetic material covering said housing opening (27).

8. Bicycle component assembly according to one of the two preceding claims, wherein said power generator (7) includes a plurality of coils (10) positioned at an outer peripheral side of the rotor (8) and spaced apart from each other.

9. Bicycle component assembly according to the preamble of claim 1 or the preceding claim, wherein the power generator's (7) coils (10) are evenly distributed around the periphery of the rotor (8) with an irregularity in distribution in a sector (35) facing the wheel's rim (4) and/or said coils (10) are positioned around the periphery of the rotor (8) with the same first pitch (p1) between neighboring pairs of coils (10) from a first coil (10a) to a last coil (101) and a second pitch (p2) larger than the first pitch between the last coil (101) and the first coil (10a).

10. Bicycle component assembly according to anyone of the preceding claims, wherein a coil carrier (29) includes a plurality of coil protrusions (30) extending radially away from the outer periphery of the rotor (8), wherein a coil (10) is wound around each of said coil protrusions (30),

11. Bicycle component assembly according to the preceding claim, wherein said coil carrier (29) forms a cup-like cage surrounding the rotor (18) and accommodated inside the generator housing (24).

12. Bicycle component assembly according to one of the two preceding claims, wherein a pair of said coil protrusions (30a; 30l) which are next to the wheel's rim (4), are spaced apart from each other at a pitch (p2) larger than a pitch (p1) between neighbouring pairs of the other coil protrusions (30a-l).

13. Bicycle component assembly according to anyone of the preceding claims, wherein at least one sensor (33) is provided for detecting the status of the bicycle lock (17) and/or the status of the connection of the bicycle lock (17) to the bicycle component assembly (6), and a misuse indicator (36) is configured to indicate misuse of the bicycle in response to at least a signal of said sensor (33).

14. Bicycle component assembly according to the preceding claim, wherein a travelling detector, in particular a global positioning module (34), is provided for detecting travelling of the bicycle (1), wherein said misuse-indicator (36) is configured to indicate misuse of the bicycle in response to at least a locking-state-signal of said sensor (33) indicating the bicycle lock (17) is locked, and a travelling signal of said travelling detector indicating the bicycle is travelling.

15. Bicycle component assembly according to one of the two preceding claims, wherein said misuse indicator (36) is configured to indicate misuse in response to a separation signal of the sensor (33) indicating separation of the bicycle component assembly (6) from the bicycle lock (17).

16. Bicycle comprising a bicycle component assembly which is configured according to anyone of the preceeding claims.
